# EUROPÄISCHE PATENTSCHRIFT

(11) **EP 0 517 938 B1**
(45) Veröffentlichungstag und Bekanntmachung des Hinweises auf die Patenterteilung: **01.03.1995**
(21) Anmeldenummer: 91109624.6
(22) Anmeldetag: 12.06.1991
(51) Int. Cl.: H02G 3/28, E04F 15/024, E04F 17/08

(54) **Modulares Einrichtungssystem**
Modular construction system
Système modulaire de construction

(43) Veröffentlichungstag der Anmeldung: 16.12.1992
(73) Patentinhaber: GTS-Design GmbH, D-85667 Oberpframmern (DE)
(72) Erfinder: Schlenzig, Günter, Isaria Werbetechnik gmbh, W-8011 Oberpframmern (DE)
(74) Vertreter: TER MEER STEINMEISTER & PARTNER GbR

(56) Entgegenhaltungen:
- CH-A- 389 053
- FR-A- 2 222 003

## Beschreibung

Die Erfindung betrifft ein modulares Einrichtungssystem gemäß dem Oberbegriff des Patentanspruchs 1.

Ein derartiges modulares Einrichtungssystem ist bereits aus der CH-A-389 053 bekannt. Es weist wenigstens einen Hohlträger auf, der im Boden eines Raumes angeordnet ist, und dessen Längsrichtung parallel zur Bodenoberfläche verläuft. In Längsrichtung des Hohlträgers sowie in dessen Oberwand sind voneinander beabstandete erste Öffnungen zur Aufnahme und Befestigung am Boden von senkrecht zum Boden über dem Hohlträger stehenden Säulen vorhanden. Ferner ist ein Bodenraum zur Aufnahme elektrischer Kabel vorgesehen, die zu den Säulen geführt sind und innerhalb der Säulen verlaufen. Abdeckelemente dienen zur Abdeckung des Bodenraumes und stützen sich am Hohlträger ab.

Im Boden eines Raumes verlegte Hohlträger zur Kabelaufnahme mit an ihrer Oberseite vorhandenen Öffnungen zur Aufnahme von säulenförmigen Elementen sind darüber hinaus auch aus der FR-A-2 222 003 bekannt.

Der Erfindung liegt die Aufgabe zugrunde, ein modulares Einrichtungssystem zu schaffen, das sowohl hinsichtlich der Befestigung von Arbeitsgerätschaften und anderen Einrichtungsgegenständen im Sinne von Möbeln als auch hinsichtlich ihrer elektrischen Verbindungsmöglichkeiten eine größere Flexibilität aufweist.

Die Lösung der gestellten Aufgabe ist im kennzeichnenden Teil des Patentanspruchs 1 angegeben. Vorteilhafte Ausgestaltungen der Erfindung sind den Unteransprüchen zu entnehmen.

Das modulare Einrichtungssystem nach der Erfindung zeichnet sich dadurch aus, daß:
die Säulen Tragelemente eines Möbel- bzw. Einrichtungssystems sind, im seitlichen Wandbereich des Hohlträgers sowie benachbart zu denjeweiligen ersten Öffnungen zweite Öffnungen angeordnet sind, der Bodenraum in Längsrichtung des Hohlträgers an der äußeren Seite seiner die zweiten Öffnungen aufweisenden Wandung angeordnet ist, und die elektrischen Kabel durch die zweiten und die ersten Öffnungen geführt werden.

Bei dem modularen Einrichtungssystem nach der Erfindung verläuft innerhalb des Bodens wenigstens ein Hohlträger. An wenigstens einer Seite des Hohlträgers sowie parallel zu ihm verläuft ein als Kabelkanal dienender Bodenraum. Durch die im regelmäßigen Abstand voneinander angeordneten ersten Öffnungen werden durch den Hohlträger Befestigungspositionen vorgegeben, an denen sich über den Hohlträger Arbeitsgerätschaften oder andere Gegenstände am Boden fixieren lassen, indem die Arbeitsgerätschaften oder Gegenstände tragende Säulen in die entsprechenden ersten Öffnungen des Hohlträgers eingesetzt und an ihm befestigt werden. Soll eine Positionsänderung der Arbeitsgerätschaften oder Gegenstände erfolgen, so brauchen die Säulen lediglich wieder aus dem Hohlträger herausgenommen und an anderer Stelle mit ihm verbunden zu werden. Auf diese Weise wird ein hoher Freiheitsgrad hinsichtlich der Positionierung der Arbeitsgerätschaften bzw. Gegenstände auf dem Boden des Raumes erreicht. Andererseits lassen sich - auch bei einem Positionswechsel - die Arbeitsgerätschaften oder anderen Gegenstände in einfacher Weise mit elektrischen Leitungen verbinden, die nur aus dem parallel zum Hohlträger verlaufenden Bodenraum durch die zweiten Öffnungen hindurch zur jeweiligen Säule geführt zu werden brauchen. Somit wird auch hinsichtlich der elektrischen Anschlußmöglichkeiten eine hohe Flexibilität erzielt. Je nach Anwendungsfall können darüber hinaus die elektrischen Leitungen ausgetauscht oder neu verlegt werden, da der Kabelkanal leicht zugänglich ist. Hierzu brauchen lediglich die Abdeckelemente vom Bodenraum abgenommen zu werden.

Der Hohlträger ist vollständig in den Boden bzw. Fußboden eingelassen, so daß seine Oberkante mit der Bodenoberfläche fluchtet. In diesem Fall ist der Bodenraum als Bodenausnehmung ausgebildet, liegt also unterhalb der Bodenoberfläche.

Andererseits kann der Hohlträger auch so zu liegen kommen, daß durch die Abdeckelemente ein Podest erhalten wird. Arbeitsplätze von z. B. Bankangestellten können dann auf dem Podest installiert werden, so daß eine bessere Kommunikation zwischen dem sitzenden Mitarbeiter und einem vor dem Podest stehenden Kunden infolge der unterschiedlichen Bodenhöhen gewährleistet ist.

Selbstverständlich ist es möglich, mehrere und im Abstand parallel zueinander angeordnete Hohlträger zu verlegen, um ein zweidimensionales Feld von Befestigungspositionen für Arbeitsgerätschaften oder andere Gegenstände zu erhalten. Zwischen jeweils zwei aufeinanderfolgenden Hohlträgern kann sich dann abwechselnd ein als Kabelkanal dienender Bodenraum und ein normaler Bodenbereich befinden. Ein jeweiliger Kabelkanal wird somit durch parallel zueinanderliegende Hohlträger begrenzt, die nur zum Bereich des Kabelkanals hin die zweiten Öffnungen aufweisen. Auch die Grenzlinien Hohlträger und Raumwand können den Kabelkanal definieren. Die Kabelkanäle liegen dabei innerhalb des Bodens bzw. unterhalb des Podests.

Die Hohlträger lassen sich aber auch in anderer geeigneter Weise im Boden anordnen, beispielsweise in Form eines rechteckförmigen Gitters, so daß dann zwei jeweils senkrecht zueinander verlaufende, parallele Gruppen von Hohlträgern vorhanden sind. Je nach Größe des Gitterabstands können die zwischen den Hohlträgern liegenden Bereiche vollständig oder nur seitlich als Bodenausnehmungen zur Aufnahme elektrischer Leitungen ausgebildet sein. Die elektrischen Leitungen können dabei auch von Bodenbereich zu Bodenbereich durch die jeweils zweiten Öffnungen in den Hohlträgern hindurchlaufen. In den Gitterbereichen können aber auch die bereits erwähnten Podeste vorhanden sein.

Das modulare Einrichtungssystem der erfindungsgemäßen Art kann, wie schon ausgeführt, in der Schalterhalle einer Bank installiert werden, um über die genannten Säulen z. B. Tische, Pulte, Theken, Sitzelemente, Beleuchtungskörper, Kontoauszugsdrucker, Bargeldautomaten, Buchungsautomaten und dergleichen am Boden anordnen zu können. Allerdings ist der Einsatzbereich des modularen Einrichtungssystems nach der Erfindung nicht auf den Bankbereich beschränkt. Es kann auch in Schalterhallen von Reisebüros, Flughäfen, Bahnhöfen und dergleichen verwendet werden.

Vorzugsweise weist der Hohlträger seitliche Bodenflansche auf, über die er auf einem Rohboden oder dem Boden befestigt ist. Die Befestigung kann beispielsweise mit Hilfe von Gewindebolzen erfolgen, die im Rohboden oder Boden verankert sind. Diese Gewindebolzen durchragen die Bodenflansche und tragen an ihrem freien, oberen Ende eine Mutter, mit der der Bodenflansch gegen den Rohboden bzw. Boden gedrückt wird. Um bei unebenem Rohboden oder Boden eine Höhenverstellung des Hohlträgers zu ermöglichen, können Distanzscheiben unter den Hohlträger gelegt werden, die zur sichereren Positionierung ebenfalls vom Gewindebolzen durchsetzt werden. Auch eine Boden- oder Rohbodenmontage in der Mittelachse des Hohlträgers ist möglich.

Nach einer vorteilhaften Ausgestaltung der Erfindung weist der Hohlträger zusätzlich an seiner dem Bodenraum zugewandten Seite einen unterhalb seiner Oberkante liegenden Flansch zum Abstützen der Abdeckelemente auf. Dabei entspricht der Abstand von der Oberkante des Hohlträgers zur Oberkante des zusätzlichen Flansches der Dicke des Abdeckelements, so daß die Oberkante des Hohlträgers und die obere Fläche des Abdeckelements miteinander fluchten. Für den Fall, daß sich die zweiten Öffnungen in der Seitenwand des Hohlträgers und der zusätzliche Seitenflansch zur Abstützung der Abdeckelemente überschneiden, wird der zusätzliche Seitenflansch im Bereich der zweiten Öffnungen entfernt. Die Abstützfunktion des Seitenflansches läßt sich dennoch aufrechterhalten, da die Abdeckelemente im allgemeinen länger sind als die Länge einer seitlichen Öffnung im Hohlträger.

Nach einer anderen vorteilhaften Ausgestaltung der Erfindung besteht die Oberwand des Hohlträgers aus zwei im Abstand parallel zueinanderliegenden Horizontalwänden, von denen die äußere als Deckel ausgebildet ist. Liegt beispielsweise die Oberseite des Hohlträgers frei, so muß dieser aus einem besonders festen und auch dekorativen Material bestehen, was relativ teuer ist. Die Oberwand kann beispielsweise aus Edelstahl hergestellt sein. Dagegen kann der untere Teil des Hohlträgers aus kostengünstigerem Material bestehen, beispielsweise aus Baustahl oder Aluminium. Um die Stabilität im oberen Bereich des Hohlträgers zu gewährleisten, ist noch die innere Horizontalwand vorhanden, die mit beiden Seitenwänden des Hohlträgers fest verbunden ist. Der Hohlträger selbst kann insgesamt einen rechteckförmigen oder quadratischen Querschnitt aufweisen. Bildet der Hohlträger den Podestschwellbalken, der z. B. mit einem Teppich überzogen sein kann, so ist es möglich, den Hohlträger auch aus einem einteiligen Aluminiumstrangpreßprofil herzustellen.

Nach einer vorteilhaften Ausgestaltung der Erfindung sind die Säulen zylindrisch und die ersten Öffnungen passend kreisförmig zur Aufnahme von mit Außengewinde versehenen Enden der Säulen ausgebildet. Dabei sind auf das Außengewinde eine auf der Oberwand zu liegen kommende Justiermutter sowie eine von unten gegen die Oberwand drückende Befestigungsmutter aufschraubbar, um die Säule am Hohlträger zu montieren. Genauer gesagt wird die Oberwand der Säule zwischen Justiermutter und Befestigungsmutter eingeklemmt, die auf dem Gewindeende der Säule sitzen.

Um zu vermeiden, daß im Falle einer aus zwei Horizontalwänden bestehenden Oberwand die Horizontalwände beim Anziehen der Befestigungsmutter zusammengedrücktwerden, sind an der Rückseite des Deckels Ansätze angeformt, die bis zur Oberseite der unteren Horizontalwand reichen. Hierdurch wird eine Abstützfunktion zwischen beiden Horizontalwänden erzielt.

Die Säulen sind vorzugsweise rohrförmig ausgebildet, wobei von der Bodenausnehmung durch die zweiten Öffnungen sowie durch die Säulen hindurch elektrische Kabel geführt sein können, die mit elektrischen Geräten verbunden sind, welche von den Säulen getragen werden.

Vorzugsweise sind alle ersten Öffnungen in der Oberwand des Hohlträgers durch Elemente abgedeckt, beispielsweise durch solche, die in die ersten Öffnungen eingeklemmt oder eingeschraubt werden können, wenn keine Säulen vorhanden sind.

Die Erfindung wird nachfolgend unter Bezugnahme auf die Zeichnung näher beschrieben. Es zeigen:
- Fig. 1: eine Perspektivansicht des teilweise zerlegten modularen Einrichtungssystems,
- Fig. 2: eine Schnittansicht in Richtung des Pfeils A in Fig. 1, und zwar im Bereich einer zweiten Öffnung liegend,
- Fig. 3: eine Seitenansicht in Richtung des Pfeils B in Fig. 1 im Bereich einer zweiten Öffnung,
- Fig. 4: ein vollständig installiertes, modulares Einrichtungssystem in der Schalterhalle einer Bank, und
- Fig. 5: einen Schnitt durch eine podestbildende Montageform des modularen Einrichtungssystems.

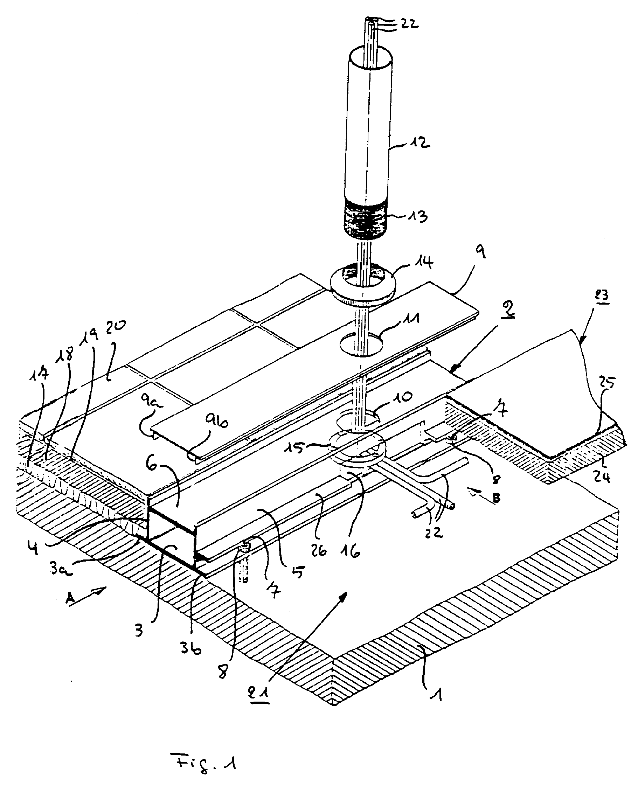

In der Fig. 1 ist mit dem Bezugszeichen 1 ein Rohboden bezeichnet, beispielsweise ein Betonboden. Auf diesem Rohboden 1 liegt parallel zu dessen Oberfläche ein Hohlträger 2, der z. B. stranggepreßt ist und aus Baustahl oder Aluminium besteht. Der Hohlträger 2 weist einen rechteckförmigen Querschnitt auf und besitzt eine untere Wand 3, zwei Seitenwände 4 und 5 sowie eine obere Horizontalwand 6, die parallel zur unteren Wand 3 liegt. Die untere Wand 3 weist in ihrer Ebene liegende Flanschbereiche 3a und 3b auf, die die jeweiligen Seitenwände 4 und 5 nach außen überragen. Über diese Flanschbereiche 3a, 3b ist der Hohlträger 2 am Rohboden 1 befestigt. Hierzu ragen im Rohboden 1 verankerte Gewindebolzen 7 durch nicht dargestellte Öffnungen in den Flanschbereichen 3a, 3b hindurch und tragen auf ihren freien Enden Muttern 8, mit denen die Flanschbereiche 3a, 3b und mit ihnen der gesamte Hohlträger 2 gegen den Rohboden 1 gezogen werden. Der Hohlträger 2 kann mehrere Meter lang sein, so daß die mit Muttern 8 versehenen Gewindebolzen 7 in geeigneten Abständen sowie an beiden Seiten des Hohlträgers 2 vorzusehen sind.

Der Hohlträger 2 ist oben mit einem Deckel 9 abgeschlossen, der zwei nach unten weisende Ansätze 9a, 9b aufweist, die die jeweiligen Seitenwände 4 und 5 hintergreifen, um somit den Deckel 9 relativ zum Hohlträger 2 zu positionieren. Die Ansätze 9a, 9b stehen so weit vom Deckel 9 nach unten ab, daß sie praktisch sehr nahe oder auf der Horizontalwand 6 zu liegen kommen. Zu diesem Zweck ist die Horizontalwand 6 gegenüber den oberen Rändern der Seitenwände 4 und 5 entsprechend nach unten versetzt angeordnet. Die Seitenbereiche des Deckels 9 liegen dann auf den oberen Rändern der Seitenwände 4 und 5 auf. Der Deckel 9 besteht vorzugsweise aus einem sehr festen und dekorativen Material, beispielsweise aus Edelstahl, da der Deckel 9 nach vollständiger Installation des Einrichtungssystems sichtbar bleibt. Er bildet praktisch einen Teil der fertigen Bodenoberfläche.

Sowohl in der Horizontalwand 6 als auch im Deckel 9 befinden sich einander gegenüberliegende Durchgangsöffnungen 10, 11 zur Aufnahme einer Säule 12, über die Arbeitsgerätschaften oder andere Gegenstände am Boden befestigt werden sollen. Derartige Durchgangsöffnungen 10, 11 können wiederholt in vorgegebenem Rasterabstand von z. B. 40 cm in Längsrichtung des Hohlträgers 2 bzw. Deckels 9 vorhanden sein. Die Säule 12 ist hohlzylinderförmig ausgebildet und besitzt an ihrem unteren Ende ein Außengewinde 13.

Soll die Säule 12 am Hohlträger 2 befestigt werden, so wird zunächst ein Justierring 14, der ein entsprechendes Innengewinde aufweist, auf das Außengewinde 13 der Säule 12 aufgeschraubt, und zwar so weit, daß das Außengewinde 13 den Justierring 14 nach unten überragt. Das freie Ende der Säule 12 wird dann mit dem Außengewinde 13 durch die Öffnungen 11 und 10 hindurchgeführt, die eine passende Größe aufweisen. Schließlich wird im Inneren des Hohlträgers 2 eine Befestigungsmutter 15 (Spannring) auf das Außengewinde 13 aufgeschraubt, wobei die Befestigungsmutter 15 an der Innenseite der Horizontalwand 6 zu liegen kommt. Durch Anziehen der Befestigungsmutter 15 wird der Justierring 14 von oben gegen den Deckel 9 gezogen, so daß schließlich die Horizontalwand 6 und der Deckel 9 zwischen Justierring 14 und Befestigungsmutter 15 eingeklemmt werden, wodurch die Säule 12 relativ zum Hohlträger 2 fest positioniert wird.

Um die Befestigungsmutter 15 in den Bereich zwischen Horizontalwand 6 und Bodenwand 3 des Hohlträgers 2 einführen zu können, ist dieser mit zweiten Öffnungen 16 versehen, die sich in der Seitenwand 5 und im Bereich einer jeweiligen ersten Öffnung 10 bzw. 11 befinden. Die Öffnungen 16 sind so groß gewählt, daß die Befestigungsmutter 15 mit Hilfe eines geeigneten Werkzeugs in gewünschter Weise auf das Außengewinde 13 der Säule 12 aufgeschraubt werden kann, wenn diese die ersten Öffnungen 10 und 11 durchragt.

Wie die Fig. 1 ferner erkennen läßt, ist der Boden außen an der Seitenwand 4 so weit hochgezogen, daß seine Oberfläche mit der Oberfläche des Deckels 9 fluchtet. Der Boden in diesem Bereich kann z. B. eine auf dem Rohboden 1 liegende Isolierung 17, einen darauf liegenden Estrich 18, ein darauf liegendes Mörtelbett 19 und einen auf dem Mörtelbett 19 liegenden Steinboden 20 aufweisen. Grundsätzlich ist aber auch eine andere Bodenstruktur in diesem Bereich denkbar.

Dagegen befindet sich an der Außenseite der Seitenwand 5 des Hohlträgers 2 eine Bodenausnehmung 21. Sie ergibt sich kostenvorteilhaft dadurch, daß in diesem Bereich z. B. auf den schwimmenden Estrich, Bodenbeläge, etc. verzichtet wird. Die Bodenausnehmung 21 verläuft parallel zum Hohlträger 2 und dient als Kanal zur Aufnahme von Kabeln 22, die z. B. durch eine zweite Öffnung 16 und durch die zugehörige Säule 12 hindurchgeführt sind, um eine elektrische Verbindung mit einem Gerät herzustellen, das von der Säule 12 getragen wird. Die Kabel 22 können Datenübertragungsleitungen und Energieversorgungsleitungen enthalten.

Die Bodenausnehmung 21 wird durch Abdeckelemente 23 abgedeckt, die sich einerseits am Hohlträger 2 und andererseits an einem vom Hohlträger 2 entfernten Element abstutzen, wobei dieses entfernte Element ebenfalls ein Hohlträger 2 oder ein anderes Bauteil sein kann. Ein Abdeckelement 23 kann beispielsweise aus einer Hohlplatte 24 bestehen, die auf ihrer oberen Fläche einen Teppichboden 25 trägt.

Zur Abstützung der Abdeckelemente 23 am Hohlträger 2 weist dieser an seiner der Bodenausnehmung 21 zugewandten Seitenwand 5 einen Zwischenflansch 26 auf, der in Längsrichtung des Hohlträgers 2 verläuft und von der Seitenwand 5 nach außen absteht. Der Abstand des Zwischenflansches 26 vom oberen Rand der Seitenwand 5 ist so gewählt, daß der Teppichboden 23 mit der Oberfläche des Deckels 9 fluchtet, wenn das Abdeckelement 23 auf den Zwischenflansch 26 aufgelegt ist. Damit der Zwischenflansch 26 die zweiten Öffnungen 16 nicht versperrt, ist dieser im Bereich der zweiten Öffnungen 16 entfernt. Im allgemeinen sind die Abdeckelemente 23 in Längsrichtung des Hohlträgers 2 länger als die zweiten Öffnungen 16, so daß hier hinsichtlich der Stabilität der Abdeckelemente 23 keine Probleme auftreten.

Die Fig. 2 zeigt einen Querschnitt durch den Hohlträger 2 im Verbindungsbereich mit einer Säule 12. Wie zu erkennen ist, werden der Deckel 9 und die Horizontalwand 6 zwischen Justiermutter 14 und Befestigungsmutter 15 eingeklemmt, wobei der Deckel 9 in seinem Randbereich auf den oberen Stirnseiten der Seitenwände 4 und 5 zu liegen kommt. Darüber hinaus kann sich der Deckel 9 mit seinen Ansätzen 9a, 9b auf der Horizontalwand 6 abstützen, so daß eine Verformung des aus den Wänden 6 und 9 bestehenden Wandbereichs bei installierter Säule 12 praktisch nicht auftreten kann.

Um einen eventuell nach oben über die Justiermutter 14 hervorstehenden Gewindebereich 13 der Säule 12 abzudecken, kann auf die Säule 12 noch eine nicht dargestellte Schutzkappe aufgesetzt werden, die mit ihrem unteren Rand auf den äußeren Umfangsrand der Justiermutter 14 aufgeklemmt wird.

Die Elemente 3 bis 6 und 26 können einstückig miteinander verbunden sein, wobei unterhalb des Zwischenflansches 26 zwischen diesem und der Seitenwand 5 noch weiteres Material 26a vorhanden sein kann, um die Belastbarkeit des Zwischenflansches 26 in Vertikalrichtung zu vergrößern.

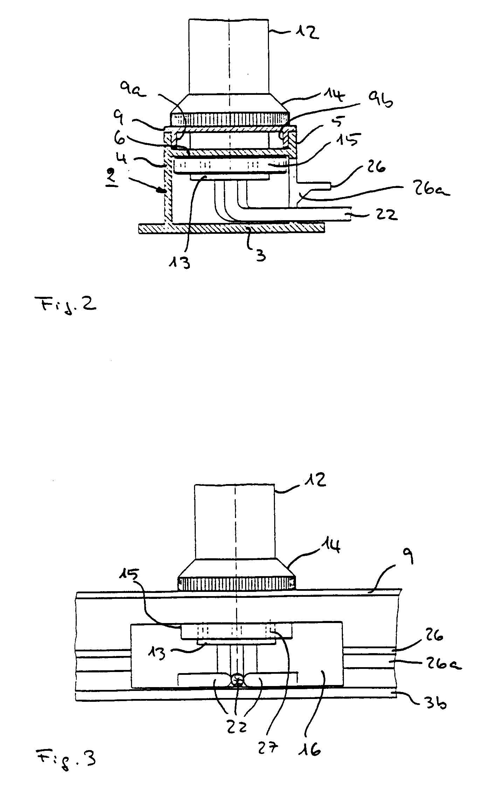

Eine Draufsicht in Richtung des Pfeils B in Fig. 1 im Bereich eines Säuleninstallationspunkts zeigt die Fig. 3. Hier ist deutlich zu erkennen, daß die zweiten Öffnungen 16 so groß gewählt sind, daß die Befestigungsmutter 15 ohne weiteres von Hand auf das Gewindeende 13 der Säule 12 aufgeschraubt werden kann, nachdem diese in den Hohlträger 2 eingesetzt worden ist. Mit Hilfe eines geeigneten Werkzeugs läßt sich dann die Befestigungsmutter 15 festziehen, wozu das Werkzeug beispielsweise in entsprechende Ausnehmungen 27 eingeführt wird, die in Axialrichtung in der Befestigungsmutter 15 verlaufen. Beispielsweise kann es sich hier um Durchgangsöffnungen 27 handeln. Im Bereich der zweiten Öffnungen 16 ist kein Zwischenflansch 26 vorhanden, um das Einsetzen und Festziehen der Befestigungsmutter 15 nicht zu behindern. Die Justiermutter 14 dient zur Höhenjustierung der Säule 12.

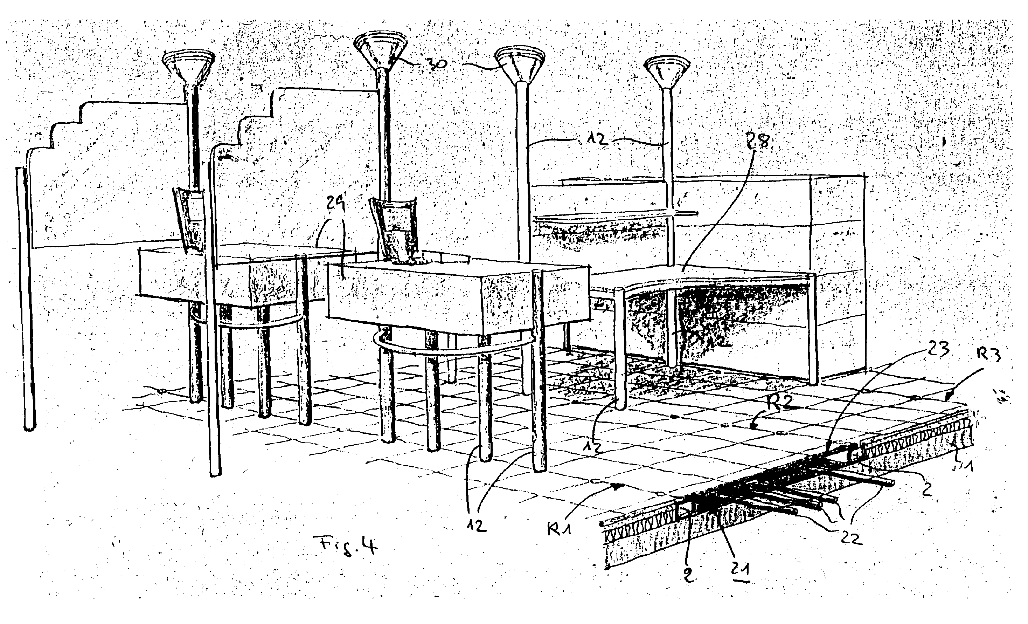

In der Fig. 4 ist eine Gesamtansicht des modularen Einrichtungssystems nach der Erfindung dargestellt, wobei die Säulen Einrichtungsgegenstände tragen.

In Abwandlung zu Fig. 1 liegen hier allerdings die Abdeckelemente 23 direkt auf den Hohlträgern 2, um die Bodenausnehmung 21 zu überbrücken. Sie weisen an ihrer oberen Seite das entsprechende Bodenmuster auf, so daß der Eindruck eines ununterbrochenen Bodens hervorgerufen wird. Die Befestigungsöffnungen für die Säulen 12 bleiben jedoch jeweils frei. Sie lassen sich, wie auch im Fall der Fig. 1 bis 3, zur Vermeidung von eventuellen Verletzungsgefahren abdecken, und zwar durch nicht dargestellte Kappenelemente, die in die genannten Öffnungen z. B. klemmend eingesetzt oder eingeschraubt werden können.

Gemäß Fig. 4 sind zwei parallel zueinander verlaufende Hohlträger 2 vorhanden, die zwischen sich die Bodenausnehmung 21 bzw. den Kabelkanal aufnehmen. An den jeweils anderen Seiten der Hohlträger 2 ist der Boden bis zum oberen Rand der Hohlträger 2 hochgezogen. Durch die beiden Hohlträger 2 werden zwei Befestigungsreihen R1 und R2 im Boden gebildet, entlang derer sich Säulen 12 aufstellen lassen. Durch weitere Hohlträger (nicht dargestellt) lassen sich im Boden weitere Befestigungsreihen R3, ... bilden, um auf diese Weise ein zweidimensionales Muster von Befestigungselementen bzw. Befestigungspositionen im Boden zu erhalten.

Die jeweiligen Säulen 12 können für den Fall, daß das Einrichtungssystem in der Schalterhalle einer Bank installiert ist, Tischplatten 28 tragen, um Arbeitsplätze für Bankangestellte oder Kunden zu bilden. Sie können aber auch zur Bildung von Pulten 29 oder Theken (nicht dargestellt) herangezogen werden und darüber hinaus auch verschieden lang sein, um z. B. an ihrer Spitze Beleuchtungskörper 30 aufzunehmen, die über die Kabel 22 mit Energie versorgt werden. Auf den Säulen 12 können aber auch andere typische elektronische Geräte positioniert werden, die üblicherweise in einer Bank benutzt werden, beispielsweise Computer, Kontoauszugsdrucker, Bargeldautomaten, usw.

Soll die Inneneinrichtung umgestaltet werden, so brauchen lediglich die Säulen 12 von den Hohlträgern 2 getrennt zu werden, was nach Entfernung der Abdeckelemente 23 und Herausziehen der Kabel 22 leicht möglich ist. Durch Umstecken der Säulen kann dann dem Innenraum ein völlig neues Design gegeben werden.

Wie bereits erwähnt, weisen die ersten Öffnungen in Längsrichtung der jeweiligen Hohlträger 2 vorzugsweise einen Abstand von 40 cm auf. Der Abstand zwischen zwei Hohlträgern 2 kann daher ein Vielfaches dieses Abstands betragen, beispielsweise das Vierfache. Auch jedes andere Rastermaß kann realisiert werden.

Es sei noch darauf hingewiesen, daß die Oberwand des Hohlträgers 2 nicht unbedingt zweiteilig sein muß, also aus Deckel 9 und Horizontalwand 6 bestehen muß. Es kann sich auch um eine einteilige Oberwand handeln, wenn diese entsprechend kratzfest ausgebildet ist oder zum Teil durch die Abdeckelemente 23 sowie zum anderen durch Bodenelemente 20 abdeckt wird.

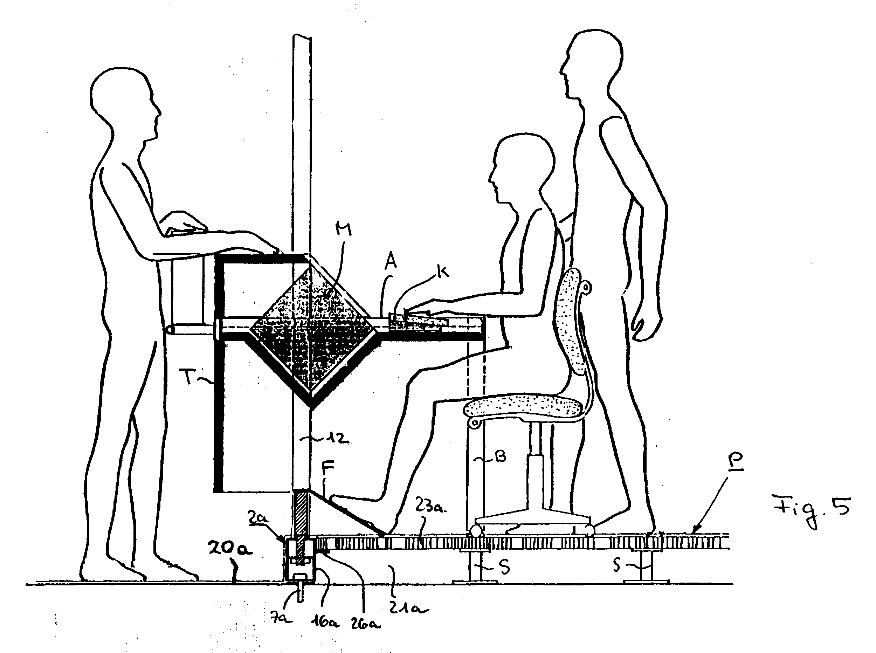

Ein zweites Ausführungsbeispiel des modularen Einrichtungssystems nach der Erfindung ist in der Fig. 5 näher dargestellt. Hier dienen die Hohlträger dazu, Podeste zu bilden, auf denen sich z. B. Arbeitsplätze installieren lassen. Ein Podest ist in Fig. 5 mit dem Bezugszeichen P gekennzeichnet. Es kann eine langgestreckte, rechteckige oder quadratische Form aufweisen und mit Hilfe eines oder mehrerer Hohlträger gebildet werden, die im seitlichen Podestbereich liegen. Das Podest P bildet dann einen Bodenraum, der auch als Kanal zur Aufnahme von Kabeln dienen kann.

Entsprechend der Fig. 5 liegt ein Hohlträger 2a auf dem Boden 20a eines Raumes, wobei der Hohlträger 2a im wesentlichen dem in Fig. 1 gezeigten Hohlträger entspricht. Der Hohlträger 2a ist über Bolzen 7a am Boden 20a oder in anderer geeigneter Weise befestigt. Er dient zur Aufnahme von Säulen 12, die ihrerseits Arbeitsgerätschaften tragen. Die Bolzen 7a lassen sich z. B. über seitliche Öffnungen 16a in den Hohlträger 2a einsetzen. Durch diese seitlichen Öffnungen 16a werden auch die Kabel (nicht dargestellt) aus dem Bodenraum 21a zu den Säulen 12 geführt.

An einer Seite des Hohlträgers 2a befindet sich ein Flansch 26a, auf dem Abdeckelemente 23a zu liegen kommen, also Bodenelemente des Podests P. Diese Abdeckelemente 23a weisen eine solche Dicke auf, daß sie nach Auflegen auf den seitlichen Flansch 26a mit der Oberfläche des Hohlträgers 2a fluchten. Im Falle einer großen Breite des Podests P senkrecht zur Längsrichtung des Hohlträgers 2a können weitere Stützelemente S vorhanden sein, um die Abdeckelemente 23a im mittleren Bereich abstützen zu können. Die Abdeckelemente 23a können vom Flansch 26a und den Stützelementen S abgenommen werden, um einen Zugang zum Kabelkanal 21a zu ermöglichen.

Rechts in Fig. 5 kann ein weiterer Hohlträger auf dem Boden 20a vorgesehen sein (nicht dargestellt), um die Abdeckelemente 23a auch an einer gegenüberliegenden Seite abstützen zu können. Der zweite Hohlträger verliefe dann parallel zum ersten Hohlträger 2a. Allerdings ist der zweite Hohlträger nicht unbedingt erforderlich, da sich die Abdeckelemente 23a auch in anderer Weise in ihrem Endbereich abstützen lassen.

Wie weiter anhand der Fig. 5 zu erkennen ist, dienen im vorliegenden Fall die Säulen 12 zum Abstützen eines Tresens T, der auf dem Podest P installiert ist. Säulen 12 können sich z. B. links und rechts vom Tresen T befinden und diesen halten. Eine Arbeitsplatte A des Tresens T kann sich darüber hinaus zusätzlich auf den Abdeckelementen 23a abstützen, und zwar über entsprechende Beine B. Hierdurch läßt sich die Stabilität des Tresens T erhöhen, in den z. B. ein Monitor M oder eine andere elektronische Einrichtung integriert sein kann. Ein Tastenfeld K kann sich innerhalb der Arbeitsplatte A befinden, um beispielsweise zu Buchungszwecken entsprechende Ein- und Ausgabeoperationen zu veranlassen.

Eine schräggestellte Fußleiste F, die sich einerseits an den Abdeckelementen 23a und andererseits am Tresen T oder an den Säulen 12 abstützen kann, dient zur Verbesserung der Sitzposition eines hinter dem Tresen T sitzenden Benutzers.

Es sei darauf hingewiesen, daß die Erfindung nicht auf die Benutzung geradliniger Hohlträger beschränkt ist. Diese können auch bogenförmig geschwungen sein, so daß sich mit ihnen, insbesondere unter Bezugnahme auf die Fig. 5, auch geschwungene Podeste P und damit geschwungene Tresen T bilden lassen. Entsprechendes gilt auch für den Aufbau nach Fig. 4. Es würden sich dann in oder auf dem Boden verlaufende Kabelkanäle von entsprechend geschwungener Gestalt ergeben.

## Patentansprüche

1. Modulares Einrichtungssystem, das die folgenden Merkmalen aufweist:
wenigstens einen Hohlträger (2, 2a), der im Boden (17 bis 20, 20a) eines Raumes angeordnet ist, dessen Längsrichtung parallel zur Bodenoberfläche verläuft, in Längsrichtung des Hohlträgers (2, 2a) sowie in dessen Oberwand (6, 9) voneinander beabstandete erste Öffnungen (10, 11) zur Aufnahme und Befestigung am Boden von senkrecht zum Boden über dem Hohlträger stehenden Säulen (12),
einen Bodenraum zur Aufnahme elektrischer Kabel (22), die zu den Säulen (12) geführt sind, und innerhalb der Säulen (12) verlaufen und
Abdeckelemente (23, 23a) zur Abdeckung des Bodenraums (21, 21a), die sich am Hohlträger (2, 2a) abstützen
dadurch **gekennzeichnet**, daß:
die Säulen Tragelemente eines Möbel- bzw.Einrichtungssystem sind,
im seitlichen Wandbereich (5) des Hohlträgers (2, 2a) sowie benachbart zu den jeweiligen ersten Öffnungen (10, 11) zweite Öffnungen (16, 16a) angeordnet sind,
der Bodenraum (21, 21a) in Längsrichtung des Hohlträgers (2, 2a) an der äußeren Seite seiner die zweiten Öffnungen (16, 16a) aufweisenden Wandung angeordnet ist,
die elektrischen Kabel (22) durch die zweiten und die ersten Öffnungen (10, 11) geführt werden.

2. Modulares Einrichtungssystem nach Anspruch 1, **dadurch ge****kennzeichnet**, daß an beiden Seiten des Bodenraums (21, 21a) parallel zueinander liegende Hohlträger (2) angeordnet sind.

3. Modulares Einrichtungssystem nach Anspruch 2, **dadurch gekennzeich****net**, daß der Hohlträger (2) seitliche Bodenflansche (3a, 3b) aufweist.

4. Modulares Einrichtungssystem nach einem der Ansprüche 1 bis 3, **da****durch gekennzeichnet**, daß der Hohlträger (2, 2a) zusätzlich an seiner dem Bodenraum (21, 21a) zugewandten Seite einen unterhalb seiner Oberkante liegenden Flansch (26, 26a) zum Abstützen der Abdeckelemente (23, 23a) aufweist.

5. Modulares Einrichtungssystem nach einem der Ansprüche 1 bis 4, **da****durch gekennzeichnet**, daß die Oberwand des Hohlträgers (2, 2a) aus zwei im Abstand parallel zueinander liegenden Horizontalwänden (6, 9) besteht, von denen die äußere als Deckel ausgebildet ist.

6. Modulares Einrichtungssystem nach einem der Ansprüche 1 bis 5, **da****durch gekennzeichnet**, daß die Säulen (12) zylindrisch und die ersten Öffnungen (10, 11) passend kreisförmig zur Aufnahme von mit Außengewinde (13) versehenen Enden der Säulen (12) ausgebildet sind, wobei auf das Außengewinde (13) eine auf der Oberwand (9) zu liegen kommende Justiermutter ( 14) sowie eine von unten gegen die Oberwand (6) drückende Befestigungsmutter (15) aufschraubbar sind.

7. Modulares Einrichtungssystem nach Anspruch 5 oder 6, **dadurch ge****kennzeichnet**, daß an der Rückseite des Deckels (9) Ansätze (9a, 9b) angeformt sind, die bis zur Oberseite der unteren Horizontalwand (6) reichen.

8. Modulares Einrichtungssystem nach einem der Ansprüche 1 bis 7, **ge****kennzeichnet durch** die ersten Öffnungen (10, 11) abdeckende Elemente.

9. Modulares Einrichtungssystem nach Anspruch 1, **dadurch gekennzeichnet**, daß der Hohlträger aus einem einteiligen Strangpreßprofilelement besteht.

## Claims

1. Modular installation system which has the following features: at least one hollow load-bearing member (2, 2a) which is arranged in the floor (17 to 20, 20a) of a room, of which the longitudinal direction runs parallel to the floor surface, spaced-apart first openings (10, 11), in the longitudinal direction of the hollow load-bearing member (2, 2a) and in the upper wall (6, 9) thereof, for receiving, and fastening on the floor, columns (12) situated perpendicularly to the floor, above the hollow load-bearing member, a floor space for receiving electric cables (22) which are guided to the columns (12) and run within the columns (12), and covering elements (23, 23a) which are intended for covering the floor space (21, 21a) and are supported on the hollow load-bearing member (2, 2a), characterized in that: the columns are load-bearing elements of a furniture or installation system, second openings (16, 16a) are arranged in the lateral wall region (5) of the hollow load-bearing member (2, 2a), and adjacent to the respective first openings (10, 11), the floor space (21, 21a) is arranged, in the longitudinal direction of the hollow load-bearing member (2, 2a), on the outer side of the wall of said hollow load-bearing member which exhibits the second openings (16, 16a), and the electric cables (22) are guided through the second openings and the first openings (10, 11).

2. Modular installation system according to Claim 1, characterized in that mutually parallel hollow load-bearing members (2) are arranged on both sides of the floor space (21, 21a).

3. Modular installation system according to Claim 2, characterized in that the hollow load-bearing member (2) exhibits lateral floor flanges (3a, 3b).

4. Modular installation system according to one of Claims 1 to 3, characterized in that the hollow load-bearing member (2, 2a) additionally exhibits, on its side which is directed towards the floor space (21, 21a), the flange (26, 26a) which is located beneath the upper edge of the hollow load-bearing member and intended for supporting the covering elements (23, 23a).

5. Modular installation system according to one of Claims 1 to 4, characterized in that the upper wall of the hollow load-bearing member (2, 2a) comprises two horizontal walls (6, 9) which are spaced apart in a mutually parallel manner and of which the outer horizontal wall is designed as a cover.

6. Modular installation system according to one of Claims 1 to 5, characterized in that the columns (12) are of cylindrical design and the first openings (10, 11) are of an appropriately circular design in order to receive those ends of the columns (12) which are provided with an external thread (13), it being possible to screw onto the external thread (13) an adjustment nut (14), which comes to bear on the upper wall (9), and a fastening nut (15) which presses against the upper wall (6) formed beneath.

7. Modular installation system according to Claim 5 or 6, characterized in that integrally formed on the rear side of the cover (9) are extensions (9a, 9b) which reach as far as the upper side of the lower horizontal wall (6).

8. Modular installation system according to one of Claims 1 to 7, characterized by elements which cover the first openings (10, 11).

9. Modular installation system according to Claim 1, characterized in that the hollow load-bearing member comprises a single-part extruded-profile element.

## Revendications

1. Système d'installation modulaire présentant les caractéristiques suivantes:
au moins un support creux (2, 2a) disposé dans le plancher (17 à 20, 20a) d'une pièce et dont la direction longitudinale est orientée parallèlement à la surface du plancher;
des premières ouvertures (10, 11) séparées l'une de l'autre, disposées selon la direction longitudinale du support creux (2, 2a) ainsi que dans sa paroi supérieure (6, 9), destinées à recevoir et à fixer au sol des colonnes (12) s'étendant au-dessus du support creux et verticalement par rapport au plancher;
un espace dans le plancher pour recevoir des câbles électriques (22) qui sont amenés jusqu'aux colonnes (12) et qui passent à l'intérieur des colonnes (12); et
des éléments de recouvrement (23, 23a) destinés à recouvrir l'espace du plancher (21, 21a) et qui s'appuient sur les supports creux (2, 2a), caractérisé:
en ce que les colonnes sont des éléments de support d'un système d'ameublement ou d'installation,
en ce que dans la zone latérale de paroi (5) du support creux (2, 2a) ainsi qu'à proximité des premières ouvertures respectives (10, 11), sont disposées des deuxièmes ouvertures (16, 16a),
en ce que l'espace de plancher (21, 21a) est disposé selon la direction longitudinale du support creux (2, 2a) sur la face extérieure de sa paroi présentant les deuxièmes ouvertures (16, 16a), et
en ce que les câbles électriques (22) sont amenés à travers les deuxièmes et les premières ouvertures (10, 11).

2. Système d'installation modulaire selon la revendication 1, caractérisé en ce que des supports creux disposés parallèlement les uns aux autres sont agencés sur les deux faces de l'espace de plancher (21, 21a).

3. Système d'installation modulaire selon la revendication 2, caractérisé en ce que le support creux (2) comporte des flancs latéraux de support de plancher (3a, 3b).

4. Système d'installation modulaire selon l'une des revendications 1 à 3, caractérisé en ce que le support creux (2, 2a) comporte en outre sur sa face tournée vers l'espace de plancher (21, 21a) un flanc (26, 26a) disposé en-dessous de son arête de bord supérieur, pour supporter des éléments de recouvrement (23, 23a).

5. Système d'installation modulaire selon l'une des revendications 1 à 4, caractérisé en ce que la paroi supérieure du support creux (2, 2a) se compose de deux parois horizontales (6, 9) qui sont disposées parallèles et à distance l'une de l'autre et dont celle qui est la plus extérieure est réalisée en forme de couvercle.

6. Système d'installation modulaire selon l'une des revendications 1 à 5, caractérisé en ce que les colonnes (12) sont cylindriques et les premières ouvertures (10, 11) présentent une forme circulaire ajustée correspondante destinée à recevoir les extrémités des colonnes (12) munies d'un filetage extérieur (13), un écrou de réglage (14) venant s'appuyer sur la paroi supérieure (9) ainsi lorsqu'un écrou de fixation (15) pressant par dessous contre la paroi supérieure (6) étant susceptibles d'être vissés sur le filetage extérieur (13).

7. Système d'installation modulaire selon la revendication 5 ou la revendication 6, caractérisé en ce que des parties en saillie (9a, 9b) sont formées sur la face arrière du couvercle (9) et s'étendent jusqu'à la face supérieure de la paroi horizontale inférieure (6).

8. Système d'installation modulaire selon l'une des revendications 1 à 7, caractérisé par des éléments de recouvrement des premières ouvertures (10, 11).

9. Système d'installation modulaire selon la revendication 1, caractérisé en ce que le support creux est constitué d'un élément profilé monobloc obtenu par extrusion.
